# EUROPÄISCHE PATENTSCHRIFT

(11) **EP 3 662 749 B1**
(45) Veröffentlichungstag und Bekanntmachung des Hinweises auf die Patenterteilung: **17.04.2024**
(21) Anmeldenummer: 19213722.2
(22) Anmeldetag: 05.12.2019
(51) Int. Cl.: A01M 7/00

(54) **VORRICHTUNG ZUM AUSBRINGEN VON FLIESSFÄHIGEN MEDIEN UND VERFAHREN ZUM BETREIBEN EINER VORRICHTUNG ZUM AUSBRINGEN VON FLIESSFÄHIGEN MEDIEN**
DEVICE FOR DISCHARGING FLOWABLE MATERIAL AND METHOD FOR OPERATING A DEVICE FOR DISCHARGING FLOWABLE MATERIAL
DISPOSITIF D'APPLICATION D'UN LIQUIDE ET PROCÉDÉ DE FONCTIONNEMENT D'UN DISPOSITIF D'APPLICATION D'UN LIQUIDE

(30) Priorität: 05.12.2018 DE 102018130941
(43) Veröffentlichungstag der Anmeldung: 10.06.2020
(73) Patentinhaber: agrotop GmbH, 93083 Obertraubling (DE)
(72) Erfinder: Graef, Steffen, 93083 Obertraubling (DE); Schenk, Thomas, 72639 Neuffen (DE); Ziermann, Martin, 94374 Schwarzach (DE)
(74) Vertreter: Hannke Bittner & Partner mbB Regensburg

(56) Entgegenhaltungen:
- FR-A1- 2 409 003
- FR-A1- 2 508 273
- FR-A1- 2 921 543
- US-A1- 2017 354 137

## Beschreibung

Die vorliegende Erfindung bezieht sich auf eine Vorrichtung zum Ausbringen von fließfähigen Medien und insbesondere auf eine Vorrichtung zum Ausbringen von Pflanzenschutzmitteln, Insektiziden und dergleichen. Im Bereich der Landwirtschaft ist es seit Langem bekannt, dass fließfähige, also insbesondere flüssige oder auch gasförmige Mittel, wie beispielsweise Pflanzenschutzmittel, flüssiger Dünger oder dergleichen an Pflanzen ausgebracht werden.

Bei einigen Anwendungen ist es dabei erforderlich, dass bei vergleichsweise hohen Pflanzen in der Landwirtschaft diese Mittel an untere Bereiche der Pflanzen ausgebracht werden. Zu diesem Zweck sind Sprühgestänge bekannt, für welche durch die Anmelderin auch die Markenbezeichnung Dropleg^{®} verwendet wird.

Diese weisen einen rohrförmigen Körper auf, der zum Leiten des jeweiligen auszubringenden Mittels dient, sowie eine Beaufschlagungseinrichtung, wie beispielsweise eine Düse, welche das Mittel auf die Pflanzen aufbringt. Dabei sind derartige Sprühstangen beispielsweise nebeneinander an einem Träger angeordnet und können so durch die einzelnen Reihen des jeweiligen Pflanzenguts transportiert werden. Wenn eine Umpositionierung erforderlich ist, beispielsweise wenn eine weitere Reihe beaufschlagt werden soll, ist es im Stand der Technik üblich, dass diese Gestänge demontiert und anschließend in einer neuen Position wieder anmontiert werden. Diese Vorgehensweise ist jedoch relativ aufwendig.

Insbesondere bei der Unterblütenbehandlung, beispielsweise von Raps, werden immer höhere Anforderungen an den Pflanzenschutz gestellt. Daher werden die oben erwähnten Gestänge eingesetzt, die nicht in dem Blütenbereich der Pflanzen spritzen und einen hohen Bienenschutz garantieren. Muss der Landwirt in eine neue Reihe fahren, muss auch das Gestänge eingeklappt werden. Dies erfordert, wie oben erwähnt, jedes Mal eine Demontage der Gestänge. Hierdurch verliert ein solches System an Akzeptanz.

Der Eintrag derartiger von der Anmelderin auch als Droplegs bezeichneter Ausbringeinrichtungen ist schon lange bekannt, auch bei Sonderkulturen. Bei Sonderkulturen wird auch ein höherer Zeitaufwand akzeptiert, da eine PSM (Pflanzenschutzmittel) - Behandlung nicht anders möglich ist. Die Gestänge werden vor Ort montiert, etwa an einer Spritzeinrichtung montiert und die Pflanzenschutzbehandlung wird durchgeführt.

Eventuell wird die Spritze vor Ort nachgefüllt. Bei aus dem Stand der Technik bekannten Lösungen sind an derartigen Gestänge angeordnete Ausbringeinrichtungen durch Seilzüge miteinander verbunden. In diesem Fall kann es allerdings dazu kommen, dass die Bewegung der einzelnen Ausbringeinrichtungen nicht mehr vollkommen frei ist, sondern diese jeweils mit benachbarten Ausbringeinrichtungen gekoppelt sind. Wird nun eine der Ausbringeinrichtungen stark ausgelenkt, überträgt sich dies auf die daneben geführte Ausbringeinrichtung und dies kann wiederum zu starken Beschädigungen der Pflanzen führen bzw. die Behandlungen in der Reihe unmöglich machen.

Die US 2017/0354137 beschreibt eine Vorrichtung nach dem Oberbegriff von Anspruch 1.

Der vorliegenden Erfindung liegt daher die Aufgabe zugrunde, einerseits eine vereinfachte Bewegung der Ausbringeinrichtungen in eine Ruheposition zu ermöglichen und andererseits auch eine zumindest allzu starke Kopplung zwischen den einzelnen Gestängen zu verhindern. Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Besprühen von Pflanzen mit fließfähigen Medien und insbesondere mit Pflanzenschutzmitteln weist wenigstens eine erste Sprüheinrichtung und eine zweite Sprüheinrichtung auf, wobei die Sprüheinrichtungen jeweils eine rohrförmige Leitungseinrichtung aufweisen, welche sich in einer vorgegebenen Längsrichtung erstreckt und welche zum Leiten eines fließfähigen Mediums und insbesondere eines Pflanzenschutzmittels geeignet und bestimmt sind und wobei die Sprüheinrichtungen jeweils wenigstens einen Sprühkopf aufweisen, der jeweils mit der ihm zugeordneten Leitungseinrichtung in Strömungsverbindung steht.

Erfindungsgemäß sind die Sprüheinrichtungen schwenkbar bezüglich einer vorgegebenen Schwenkachse an einem Träger angeordnet und die Vorrichtung weist eine Stelleinrichtung auf, welche ein Schwenken sowohl der ersten Sprüheinrichtung als auch der zweiten Sprüheinrichtung zwischen einer Arbeitsstellung und einer Ruhestellung ermöglicht.

Es wird daher vorgeschlagen, dass die einzelnen Sprüheinrichtungen, insbesondere die oben als Droplegs bezeichneten Sprüheinrichtungen schwenkbar an einem Träger angeordnet sind und insbesondere schwenkbar in einem Bereich, so dass diese von einem Arbeitsmodus in einen Ruhemodus geschwenkt bzw. geklappt werden können.

Allgemein könnten die Sprüheinrichtungen auch als Beaufschlagungseinrichtungen bezeichnet werden, welche dazu geeignet und bestimmt sind, ein fließfähiges Medium auf Pflanzen aufzubringen.

Bevorzugt kann zumindest in der Arbeitsstellung der Sprüheinrichtungen das fließfähige Medium ausgebracht werden. Bevorzugt ist in der Ruhestellung der Sprüheinrichtungen ein Transport derselben möglich und insbesondere ein Transport zwischen unterschiedlichen zu besprühenden Bereichen. Besonders bevorzugt befindet sich in einer Ruhestellung der Sprüheinrichtung deren jeweiliger Sprühkopf an einer (bezogen auf eine vertikale Richtung) höheren Position als in einer Arbeitsstellung.

Bei einer weiteren bevorzugten Ausführungsform sind in der Ruhestellung die Sprüheinrichtungen bzw. deren rohrförmige Leitungseinrichtungen im Wesentlichen vertikal ausgerichtet, wobei unter im Wesentlichen vertikal insbesondere verstanden wird, dass die Längsrichtungen der Leitungseinrichtungen von der exakt vertikalen Ausrichtung um nicht mehr als 20°, bevorzugt um nicht mehr als 15°, bevorzugt um nicht mehr als 10° und besonders bevorzugt um nicht mehr als 5° abweichen.

Bei einer weiteren vorteilhaften Ausführungsform weist die Vorrichtung eine Antriebseinrichtung für die Stelleinrichtung auf. Hierbei könnte es sich beispielsweise um eine pneumatische Antriebseinrichtung handeln. Dies wäre besonders günstig, da moderne Traktoren oft Druckluftanschlüsse aufweisen. Es wäre jedoch auch eine elektrische oder magnetische oder auch hydraulische Antriebseinrichtung denkbar.

Bei einer weiteren vorteilhaften Ausführungsform weist die Vorrichtung mehr als zwei Sprüheinrichtungen auf, bevorzugt mehr als drei und bevorzugt mehr als 4 Sprüheinrichtungen, bevorzugt mehr als 10 Sprüheinrichtungen, bevorzugt mehr als 20 Sprüheinrichtungen und bevorzugt mehr als 30 Sprüheinrichtungen. Besonders bevorzugt sind mehrere und besonders bevorzugt sämtliche dieser Sprüheinrichtungen wie oben erwähnt schwenkbar, um von einer Arbeitsstellung in eine Ruhestellung gebracht zu werden.

Dabei ist es möglich, dass die Sprüheinrichtungen aus unterschiedlichen Materialien hergestellt sind, beispielsweise aus Metall oder auch aus Kunststoff. Daneben können die Sprüheinrichtungen auch aus mehreren unterschiedlichen Materialien hergestellt sein. Erfindungsgemäß ist eine Schwenkbewegung der ersten Sprüheinrichtung in wenigstens einer Schwenkrichtung nicht mit der Schwenkbewegung der zweiten Sprüheinrichtung gekoppelt.

Dabei ist in wenigstens einer Stellung der Stelleinrichtung die Schwenkbewegung der ersten Sprüheinrichtung nicht mit der Schwenkbewegung der zweiten Sprüheinrichtung gekoppelt und/oder die erste Sprüheinrichtung kann unabhängig von der zweiten Sprüheinrichtung geschwenkt werden.

Hierbei handelt es sich erfindungsgemäß um die Arbeitsstellung der erfindungsgemäßen Vorrichtung, in der die Sprüheinrichtungen bevorzugt eine gewisse Schwenkbarkeit aufweisen, jedoch die Schwenkbewegungen nicht miteinander gekoppelt sind. Bei einer weiteren vorteilhaften Ausführungsform sind die erste Sprüheinrichtung und die zweite Sprüheinrichtung nicht miteinander gekoppelt.

Wie oben erwähnt weist die Vorrichtung bevorzugt mehrere Sprüheinrichtungen auf. Vorteilhaft sind diese einzelnen Sprüheinrichtungen nicht miteinander gekoppelt. Auf diese Weise beeinflusst eine Schwenkbewegung der ersten Sprüheinrichtung nicht die Schwenkbewegung der zweiten Sprüheinrichtung und diese sind bevorzugt bezüglich einander vollkommen frei beweglich.

Damit betrifft die Erfindung eine Einheit, die es ermöglicht, in einem montierten Zustand die Sprüheinrichtungen an einer Position, beispielsweise einem Gestänge anzulegen.

Dabei ist es möglich, dass je Teilbreite eine Verschiebeeinheit angebracht wird. Erfindungsgemäß ist die Schwenkachse der Sprüheinrichtungen senkrecht zu der Längsrichtung der Leitungseinrichtung. Besonders bevorzugt liegt eine Längseinrichtung der Sprüheinrichtung in der Schwenkebene. Bei einer weiteren vorteilhaften Ausführungsform liegt die Schwenkebene auch senkrecht zu einer Fahrtrichtung, etwa eines Traktors, der die vorliegende Erfindung trägt.

Bei einer weiteren vorteilhaften Ausführungsform ist die Sprüheinrichtung um einen Winkel schwenkbar, der größer ist als 10°, bevorzugt größer als 20°, bevorzugt größer als 30° und bevorzugt größer als 40°.

Bei einer weiteren vorteilhaften Ausführungsform ist die Sprüheinrichtung um einen Schwenkwinkel schwenkbar, der kleiner ist als 180°, bevorzugt kleiner als 160°, bevorzugt kleiner 140°, bevorzugt kleiner 120° und besonders bevorzugt kleiner als 100° und bevorzugt kleiner als 90° und bevorzugt kleiner als 80°.

Erfindungsgemäß ist die Stelleinrichtung beweglich gegenüber dem Träger. Besonders bevorzugt ist die Stelleinrichtung linear beweglich gegenüber dem Träger.

Bei einer weiteren vorteilhaften Ausführungsform ist durch eine Bewegung der Stelleinrichtung gegenüber dem Träger ein Abstand zwischen der Stelleinrichtung und dem Träger veränderbar. Dabei ist es möglich, dass sich der Träger in einer Breitenrichtung (welche senkrecht zu einer Fahrtrichtung eines Fahrzeugs, an dem die Sprüheinrichtungen angeordnet sind) erstreckt und ebenso die Stelleinrichtung senkrecht zu dieser Richtung ist. Bei dieser Breitenrichtung kann es sich etwa um eine Richtung handeln, die senkrecht zu einer Bewegungsrichtung bzw. Fahrtrichtung eines Traktors steht.

Besonders bevorzugt erstreckt sich auch die Stelleinrichtung in der besagten Breitenrichtung. Besonders bevorzugt sind die Richtung, in der sich die Stelleinrichtung erstreckt, und die Breitenrichtung und die Richtung, in der sich der Träger erstreckt, zueinander parallel. Besonders bevorzugt ist die Stelleinrichtung gegenüber dem Träger in der Breitenrichtung bewegbar. Besonders bevorzugt wird eine lineare translatorische Bewegung entlang dem Gestänge bzw. dem Träger durchgeführt. Diese löst besonders bevorzugt auch in der Höhe eine Hubbewegung aus. Unter der Höhenrichtung wird dabei insbesondere eine vertikale Richtung verstanden.

An einem oberen Ende der Sprüheinrichtungen können kleine Nasen bzw. Vorsprünge angebracht sein, die von der Stelleinrichtung mitgenommen werden.

Bei einer bevorzugten Ausführungsform ist die Stelleinrichtung als stegartiges langgestrecktes Element ausgebildet.

Bei einer besonders bevorzugten Ausführungsform steht die Stelleinrichtung mit dem Träger über wenigstens ein Kopplungselement und bevorzugt über wenigstens zwei Kopplungselemente in Verbindung. Dabei ist es möglich, dass diese Kopplungselemente schwenkbar an dem Träger angeordnet sind. Daneben sind bevorzugt diese Kopplungselemente auch schwenkbar an der Stelleinrichtung angeordnet. So kann es sich beispielsweise um Verbindungsstege handeln, die gelenkig sowohl mit dem Träger als auch mit der Stelleinrichtung verbunden sind.

Erfindungsgemäß ist an wenigstens einer Sprüheinrichtung ein Vorsprung angeordnet, der die Stelleinrichtung - insbesondere in wenigstens einer Position der Stelleinrichtung - kontaktiert. Dabei kann dieser Vorsprung (zumindest zeitweise bzw. insbesondere während zum Verbringen der Sprüheinrichtung von der Arbeitsposition in die Ruheposition) an einer Oberkante der Stelleinrichtung aufliegen.

Vorteilhaft ist dieser Vorsprung als stift- oder stangenförmiger Körper ausgebildet.

Bei einer bevorzugten Ausführungsform besteht in der Arbeitsposition kein mechanischer Kontakt zwischen der Stelleinrichtung und der Sprüheinrichtung und/oder zwischen der Stelleinrichtung und dem Vorsprung besteht.

Besonders bevorzugt ist dieser Vorsprung derart ausgebildet, dass eine Ruhestellung der Stelleinrichtung existiert, in der kein Kontakt zwischen der Stelleinrichtung und dem Vorsprung besteht. In dieser Position können daher die Sprüheinrichtungen frei schwenken und werden insbesondere nicht durch die Stelleinrichtung an dem Schwenkvorgang gehindert.

Damit besteht der große Vorteil darin, dass die Sprüheinrichtungen während des Einsatzes frei in der Kultur bewegt werden können und sich gegenseitig nicht beeinflussen.

Wird nun das Gestänge bzw. die Stelleinrichtung insbesondere am Vorgewende oder am Ende eines Spritzvorgangs angehoben, hängen alle Sprüheinrichtungen senkrecht nach unten. In einem weiteren Schritt kann die Verschiebeeinheit betätigt werden und die Sprüheinrichtungen können von der unteren Quertraverse, das heißt insbesondere der Stelleinrichtung, mitgenommen werden und bevorzugt auch an dem Träger bzw. Gestänge angelegt werden.

Danach kann wie aus dem Stand der Technik bekannt, das gesamte Gestänge zusammengeklappt werden. Auf diese Weise kann auch die Ausdehnung in der Breitenrichtung reduziert werden.

Besonders bevorzugt weist daher der Träger ein erstes Trägerteil und ein zweites Trägerteil auf, die bezüglich einander schwenkbar und/ oder klappbar sind.

Durch die unterschiedliche Gestaltung der Gestänge bzw. des Trägers und/ oder der Stelleinrichtung kann es auch von Vorteil sein, die Verschiebebewegung nicht translatorisch auszuführen, sondern in einer Rotationsbewegung. Vorteilhaft ist hierzu eine Welle vorgesehen, an der wiederum die oben beschriebenen Nasen bzw. Vorsprünge, die an den Sprüheinrichtungen angeordnet sind, anliegen.

Auch könnten exzentrisch ausgebildete Stelleinrichtungen verwendet werden, die beispielsweise um eine Achse drehbar oder schwenkbar sind, welche parallel zu dem Träger verläuft. Diese Stelleinrichtungen könnten jeweils die oben genannten Vorsprünge kontaktieren, um so das Schwenken der Sprüheinrichtungen zu erreichen.

Bei einer weiteren vorteilhaften Ausführungsform ist der Vorsprung über einen Ausleger an der Sprüheinrichtung angeordnet. Auf diese Weise kann die Schwenkbewegung der Sprüheinrichtung vereinfacht werden. Bei einer weiteren vorteilhaften Ausführungsform weist die Sprüheinrichtung eine Anschlusseinrichtung auf, um eine Zuführleitung zur Zuführung eines Pflanzenschutzmittels oder allgemein des fließfähigen Mediums anzuschließen. Dabei kann es sich bei der Anschlusseinrichtung um ein Kopplungselement handeln, welches ohne die Zuhilfenahme von Werkzeug an- oder abgekoppelt werden kann. Dieses Kopplungselement könnte beispielsweise als Steckkupplung oder als Bajonettkupplung ausgebildet sein.

Bei einer weiteren bevorzugten Ausführungsform die Vorrichtung eine Zuführeinrichtung und insbesondere eine Zuführleitung auf, welche den einzelnen Sprüheinrichtungen das fließfähige Medium zuführt. Dabei ist es möglich, dass diese Zuführleitung mehrere Sprüheinrichtungen mit dem fließfähigen Medium versorgt.

Bei einer bevorzugten Ausführungsform sind Verbindungsleitungen vorgesehen, welche diese Zuführleitung mit den einzelnen Sprüheinrichtungen verbinden. Bei einer bevorzugten Ausführungsform kann es sich bei diesen Verbindungsleitungen um flexible Leitungen wie insbesondere aber nicht ausschließlich um Schlauchverbindungen handeln. Diese Schläuche können dabei in ihrer Flexibilität insbesondere derart ausgelegt sein, dass sie ein Schwenken der Sprüheinrichtungen erlauben.

Bei einer weiteren bevorzugten Ausführungsform können zwischen der Zuführleitung und den einzelnen Sprüheinrichtungen und/oder zwischen Regulierungs- und/oder Sperreinrichtungen vorgesehen sein, welche dazu geeignet und bestimmt ist, eine zu den Sprüheinrichtungen gelangenden Flüssigkeitsstrom zu sperren oder zu regulieren. So könnten beispielsweise Durchflussregler und/oder Ventile vorgesehen sein.

Wie oben erwähnt, kann es sich bei der Antriebseinrichtung zur Durchführung der Bewegung um ein pneumatisches Antriebsmittel handeln, insbesondere ein Antriebsmittel, welches pneumatische Zylinder aufweist.

Bei einer weiteren besonderen Ausführungsform sind die Sprüheinrichtung und/ oder auch weitere Elemente, wie insbesondere der Träger und/ oder die Stelleinrichtung, aus einem Kunststoff gefertigt. Insbesondere handelt es sich dabei um Teile, die in einem Spritzgussverfahren gefertigt sind.

Die vorliegende Erfindung ist weiterhin auf ein Verfahren zum Betreiben einer Vorrichtung zum Besprühen von Pflanzen mit fließfähigen Medien und insbesondere mit Pflanzenschutzmitteln (PSM) gerichtet, wobei in einer Arbeitsstellung mit wenigstens einer ersten Sprüheinrichtung und einer zweiten Sprüheinrichtung das fließfähige Medium auf die Pflanzen aufgebracht wird, wobei die Sprüheinrichtungen jeweils eine rohrförmige Leitungseinrichtung aufweisen welche sich in einer vorgegebenen Längsrichtung erstrecken und welche das fließfähigen Medium leiten und wobei die Sprüheinrichtungen jeweils wenigstens einen Sprühkopf zum Ausbringen des fließfähigen Mediums aufweisen, der jeweils mit der ihm zugeordneten Leitungseinrichtung in Strömungsverbindung steht.

Erfindungsgemäß werden die Sprüheinrichtungen zum Überführen der Vorrichtung von der Arbeitsstellung in eine Ruhestellung bezüglich einer vorgegebenen Schwenkachse geschwenkt, wobei die Sprüheinrichtungen schwenkbar an einem Träger angeordnet sind und wobei mittels einer Stelleinrichtung ein Schwenken sowohl der ersten Sprüheinrichtung als auch der zweiten Sprüheinrichtung zwischen einer Arbeitsstellung und der Ruhestellung durchgeführt wird.

Weitere Vorteile und Ausführungsformen ergeben sich aus den beigefügten Figuren:

### Darin zeigen:

- Fig. 1: Eine Darstellung einer erfindungsgemäßen Vorrichtung; und
- Fig. 2: Eine Detaildarstellung der in Figur 1 gezeigten Vorrichtung.

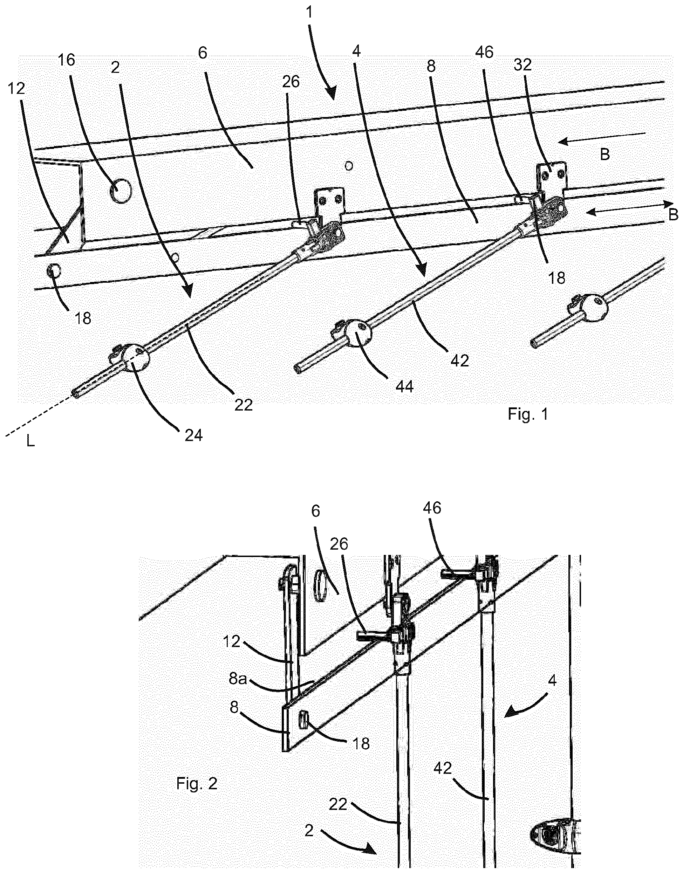

Figur 1 zeigt eine Darstellung einer erfindungsgemäßen Vorrichtung 1. Dabei bezieht sich das Bezugszeichen 6 auf einen Träger, der beispielsweise an einer landwirtschaftlichen Maschine, wie etwa einem Traktor, montiert sein kann. An diesem Träger 6 ist eine Vielzahl von Sprüheinrichtungen 2, 4 angeordnet. Dabei sind diese Sprüheinrichtungen hier in einer Ebene schwenkbar, die im Wesentlichen in der Figurenebene liegt. Das Bezugszeichen 32 kennzeichnet ein Befestigungsmittel, mit dem die Schwenkeinrichtungen zum Schwenken der Sprüheinrichtung 2, 4 an dem Träger befestigt sind. Dieses Befestigungsmittel kann an dem Träger 6 befestigt, z.B. angeschraubt sein.

Die Bezugszeichen 24 und 44 beziehen sich jeweils auf Sprühköpfe, die an Leitungseinrichtungen 22, 42 angeordnet sind. Diese Leitungseinrichtungen können dabei ebenso aus Kunststoff bestehen und eine gewisse Flexibilität aufweisen. Es wäre auch möglich, dass an jeder Leitungseinrichtung zwei oder auch mehrere Sprühköpfe angeordnet sind. Auf diese Weise können die Pflanzen auf unterschiedlichen Höhen mit dem jeweiligen Mittel beaufschlagt werden.

Das Bezugszeichen 8 kennzeichnet eine Stelleinrichtung, die zum Schwenken der Sprüheinrichtungen 2, 4 dient. Zu diesem Zweck weisen die Sprüheinrichtungen 2, 4 Vorsprünge 26, 46 auf, die an einer Oberseite der Stelleinrichtung 8 anliegen. Das Bezugszeichen L kennzeichnet eine Längsrichtung der Sprüheinrichtungen bzw. deren Leitungseinrichtung.

Die Stelleinrichtung 8 ist in Richtung des Doppelpfeils B bewegbar, wobei B gleichzeitig die Breitenrichtung des Trägers und auch der Stelleinrichtung ist. Zu diesem Zweck sind über Gelenke 16 und 18 Kopplungselemente bzw. Stege zwischen dem Träger 6 und der Stelleinrichtung 8 angeordnet. Daher führt ein Bewegen der Stelleinrichtung 8 auch zu einem Anheben oder Absenken dieser Stelleinrichtung und auf diese Weise kann der Schwenkvorgang der Sprüheinrichtungen 2, 4 eingeleitet werden.

Figur 2 zeigt eine Darstellung, bei der die Stelleinrichtung 8 in der untersten Position ist. Man erkennt, dass hier das Kopplungselement 12 ebenfalls vertikal ausgerichtet ist. In diesem Fall kontaktiert die Oberkante 8a nicht die Vorsprünge 26 und 46. Aus diesem Grund können die Sprüheinrichtungen 2, 4 ungehindert und auch nicht miteinander gekoppelt schwenken.

Der in Figur 1 gezeigte Ausleger 18, über den die Vorsprünge an den Sprüheinrichtungen angeordnet sind, bewirkt, dass bei einem Anheben der Stelleinrichtung 8 die Sprüheinrichtungen gezielt in einer Richtung geschwenkt werden, das heißt in Figur 1 entgegen dem Uhrzeigersinn.

### Bezugszeichenliste

- 2: Sprüheinrichtungen
- 4: Sprüheinrichtungen
- 6: Träger
- 8: Stelleinrichtung
- 16: Gelenke
- 18: Gelenke
- 18: Ausleger
- 22: Leitungseinrichtungen
- 24: Sprühköpfe
- 26: Vorsprung
- 32: Befestigungsmittel
- 42: Leitungseinrichtungen
- 44: Sprühköpfe
- 46: Vorsprung
- 8a: Oberkante
- B: Breitenrichtung des Trägers und der Stelleinrichtung
- L: Längsrichtung

## Patentansprüche

1. Vorrichtung (1) zum Besprühen von Pflanzen mit fließfähigen Medien und insbesondere mit Pflanzenschutzmitteln (PSM), mit wenigstens einer ersten Sprüheinrichtung (2) und einer zweiten Sprüheinrichtung (4), wobei die Sprüheinrichtungen (2, 4) jeweils eine rohrförmige Leitungseinrichtung (22, 42) aufweisen welche sich in einer vorgegebenen Längsrichtung (L) erstrecken und welche zum Leiten eines fließfähigen Pflanzenschutzmittels geeignet und bestimmt sind und wobei die Sprüheinrichtungen jeweils wenigstens einen Sprühkopf (24, 44) aufweisen, der jeweils mit der ihm zugeordneten Leitungseinrichtung in Strömungsverbindung steht,
wobei
die Sprüheinrichtungen (2, 4) schwenkbar bezüglich einer vorgegebenen Schwenkachse (S) an einem Träger (6) angeordnet sind, wobei die Schwenkachse (S) senkrecht zu der Längsrichtung (L) der Leitungseinrichtung (22, 42) ist und die Vorrichtung eine Stelleinrichtung (8) aufweist, welche ein Schwenken sowohl der ersten Sprüheinrichtung (2) als auch der zweiten Sprüheinrichtung (4) zwischen einer Arbeitsstellung und einer Ruhestellung erlaubt, wobei die Stelleinrichtung (8) beweglich gegenüber dem Träger (6) ist,
**dadurch gekennzeichnet, dass** in der Arbeitsstellung
eine Schwenkbewegung der ersten Sprüheinrichtung (2) bezüglich der Schwenkachse (S) in wenigstens einer Schwenkrichtung nicht mit der Schwenkbewegung der zweiten Sprüheinrichtung (4) bezüglich der Schwenkachse (S) gekoppelt ist, wobei an wenigstens einer Sprüheinrichtung (2, 4) ein Vorsprung (26, 46) angeordnet ist, welcher die Stelleinrichtung (8) in Abhängigkeit von einer Position der Stelleinrichtung kontaktiert.

2. Vorrichtung (1) nach Anspruch 1,
**dadurch gekennzeichnet, dass**
die Sprüheinrichtung (2) um einen Schwenkwinkel schwenkbar ist, der größer ist als 10°, bevorzugt größer als 20°, bevorzugt größer als 30° und bevorzugt größer als 40°.

3. Vorrichtung (1) nach wenigstens einem der vorangegangenen Ansprüche,
**dadurch gekennzeichnet, dass**
durch eine Bewegung der Stelleinrichtung (8) gegenüber dem Träger (6) ein Abstand zwischen der Stelleinrichtung (8) und dem Träger (6) veränderbar ist.

4. Vorrichtung (1) nach wenigstens einem der vorangegangenen Ansprüche,
**dadurch gekennzeichnet, dass**
die Stelleinrichtung (8) mit dem Träger (6) über wenigstens zwei Kopplungselemente (12) in Verbindung steht.

5. Vorrichtung (1) nach wenigstens einem der vorangegangenen Ansprüche,
**dadurch gekennzeichnet, dass**
in der Arbeitsposition kein mechanischer Kontakt zwischen der Stelleinrichtung (8) und der Sprüheinrichtung und zwischen der Stelleinrichtung (8) und dem Vorsprung (26, 46) besteht.

6. Vorrichtung (1) nach dem vorangegangenen Anspruch,
**dadurch gekennzeichnet, dass**
der Vorsprung über einen Ausleger (14) an der Sprüheinrichtung angeordnet ist.

7. Vorrichtung (1) nach wenigstens einem der vorangegangenen Ansprüche,
**dadurch gekennzeichnet, dass**
die Sprüheinrichtung (2, 4) eine Anschlusseinrichtung aufweist, um eine Zuführleitung zur Zuführung des Pflanzenschutzmittels anzuschließen.

8. Verfahren zum Betreiben einer Vorrichtung (1) zum Besprühen von Pflanzen mit fließfähigen Medien und insbesondere mit Pflanzenschutzmitteln (PSM), wobei in einer Arbeitsstellung mit wenigstens einer ersten Sprüheinrichtung (2) und einer zweiten Sprüheinrichtung (4) das fließfähige Medium auf die Pflanzen aufgebracht wird, wobei die Sprüheinrichtungen (2, 4) jeweils eine rohrförmige Leitungseinrichtung (22, 42) aufweisen welche sich in einer vorgegebenen Längsrichtung (L) erstrecken und welche das fließfähigen Medium leiten und wobei die Sprüheinrichtungen jeweils wenigstens einen Sprühkopf (24, 44) zum Ausbringen des fließfähigen Mediums aufweisen, der jeweils mit der ihm zugeordneten Leitungseinrichtung in Strömungsverbindung steht,
wobei die Sprüheinrichtungen zum Überführen der Vorrichtung von der Arbeitsstellung in eine Ruhestellung bezüglich einer vorgegebenen Schwenkachse (S) geschwenkt werden, wobei die Schwenkachse (S) senkrecht zur Längsachse (L) der Leitungseinrichtungen (22, 42) ist,
wobei die Sprüheinrichtungen schwenkbar an einem Träger (6) angeordnet sind und wobei mittels einer Stelleinrichtung ein Schwenken sowohl der ersten Sprüheinrichtung (2) als auch der zweiten Sprüheinrichtung (4) zwischen einer Arbeitsstellung und der Ruhestellung durchgeführt wird, wobei die Stelleinrichtung (8) beweglich gegenüber dem Träger (6) ist,
**dadurch gekennzeichnet, dass** in der Arbeitsstellung
eine Schwenkbewegung der ersten Sprüheinrichtung (2) bezüglich der Schwenkachse (S) in wenigstens einer Schwenkrichtung nicht mit der Schwenkbewegung der zweiten Sprüheinrichtung (4) bezüglich der Schwenkachse (S) gekoppelt ist, wobei an wenigstens einer Sprüheinrichtung (2, 4) ein Vorsprung (26, 46) angeordnet ist, welcher die Stelleinrichtung (8) in Abhängigkeit von einer Position der Stelleinrichtung kontaktiert.

## Claims

1. An apparatus (1) for spraying flowable media and in particular plant protection agents (PSM) onto plants, comprising at least a first spray device (2) and a second spray device (4), wherein each of the the spray devices (2, 4) has a tubular conduit device (22, 42) that extends in a predetermined longitudinal direction (L) and is suitable and intended for conducting a flowable plant protection agent, and wherein each of the spray units has at least one spray head (24, 44) that is in flow communication with the conduit device associated therewith,
wherein
the spray devices (2, 4) are provided in a pivotable manner in relation to a predetermined pivot axis (S) on a carrier (6), wherein the pivot axis (S) is perpendicular to the longitudinal direction (L) of the conduit device (22, 42) and the apparatus has an adjustment unit (8) that allows both the first spray device (2) and the second spray device (4) to be pivoted between a working position and an idle position, wherein the adjustment device (8) is movable relative to the carrier (6),
**characterised in that**
in the working position a pivoting movement of the first spray device (2) with respect to the pivot axis (S) in at least one pivoting direction is not coupled to the pivoting movement of the second spray device (4) with respect to the pivot axis (S), wherein a projection (26, 46) is arranged on at least one spray device (2, 4) which contacts the adjustment devcie (8) as a function of a position of the adjustment device.

2. The apparatus (1) as claimed in claim 1,
**characterised in that**
the spray deivce (2) is pivotable about a pivoting angle that is greater than 10°, preferably greater than 20°, preferably greater than 30° and preferably greater than 40°.

3. The apparatus (1) as claimed in at least one of the preceding claims, **characterised in that**
a distance between the adjustment device (8) and the carrier (6) is changeable by a movement of the adjustment device (8) relative to the carrier (6).

4. The apparatus (1) as claimed in at least one of the preceding claims, **characterised in that**
the adjustment device (8) is in connection with the carrier (6) via at least two coupling elements (12).

5. The apparatus (1) as claimed in at least one of the preceding claims, **characterised in that**
in the working position, there is no mechanical contact between the adjustment deice (8) and the spray device and between the adjustment devicet (8) and the projection (26, 46).

6. The apparatus (1) as claimed in the preceding claim,
**characterised in that**
the projection is provided on the spray device via a cantilever (14).

7. The apparatus (1) as claimed in at least one of the preceding claims, **characterised in that**
the spray device (2, 4) has a connection unit in order to connect a supply conduit for supplying the plant protection agent.

8. A method for operating an apparatus (1) for spraying flowable media and in particular plant protection agents (PSM) onto plants, wherein in a working position, the flowable medium is dispensed onto the plants by at least a first spray device (2) and a second spray device (4), wherein each of the spray devices (2, 4) has a tubular conduit device (22, 42) that extends in a predetermined longitudinal direction (L) and which conducts the flowable medium, and wherein each of the spray devices have at least one spray head (24, 44) for dispensing the flowable medium, which is respectively in flow communication with the conduit device associated therewith,
wherein the spray devices being pivoted in relation to a predetermined pivot axis (S) for transferring the apparatus from the working position into an idle position, wherein the pivot axis (S) is perpendicular to the longitudinal axis (L) of the conduit device (22, 42),
wherein the spray devices are pivotally arranged on a carrier (6) and wherein a pivoting movement of both the first spray device (2) and the second spray device (4) between a working position and the idle position is carried out by means of an adjustment device, wherein the adjustment device (8) is moveable with respect to the carrier (6), **characterised in that**
in the working position a pivoting movement of the first spray device (2) with respect to the pivot axis (S) in at least one pivoting direction is not coupled to the pivoting movement of the second spray device (4) with respect to the pivot axis (S), wherein a projection (26, 46) is arranged on at least one spray device (2, 4) which contacts the adjustment devcie (8) as a function of a position of the adjustment device.

## Revendications

1. Dispositif (1) de pulvérisation de plantes avec des produits pouvant s'écouler et en particulier avec des produits phytosanitaires (PSM), avec au moins un premier système de pulvérisation (2) et un deuxième système de pulvérisation (4), dans lequel les systèmes de pulvérisation (2, 4) présentent respectivement un système de conduite tubulaire (22, 42), lesquels s'étendent dans une direction longitudinale (L) prédéfinie et lesquels sont adaptés pour et se destinent à acheminer un produit phytosanitaire pouvant s'écouler, et dans lequel les systèmes de pulvérisation présentent respectivement au moins une tête de pulvérisation (24, 44), qui est en communication fluidique respectivement avec le système de conduite qui lui est associé,
dans lequel
les systèmes de pulvérisation (2, 4) sont disposés sur un support (6) de manière à pouvoir pivoter par rapport à un axe de pivotement (S) prédéfini, dans lequel l'axe de pivotement (S) est perpendiculaire à la direction longitudinale (L) du système de conduite (22, 42) et le dispositif présente un système de réglage (8), lequel permet un pivotement à la fois du premier système de pulvérisation (2) et du deuxième système de pulvérisation (4) entre une position de travail et une position de repos, dans lequel le système de réglage (8) est mobile par rapport au support (6),
**caractérisé en ce que**
dans la position de travail, un déplacement par pivotement du premier système de pulvérisation (2) par rapport à l'axe de pivotement (S) dans au moins une direction de pivotement n'est pas couplé au déplacement par pivotement du deuxième système de pulvérisation (4) par rapport à l'axe de pivotement (S), dans lequel est disposée sur au moins un système de pulvérisation (2, 4) une partie faisant saillie (26, 46), laquelle établit un contact avec le système de réglage (8) en fonction d'une position du système de réglage.

2. Dispositif (1) selon la revendication 1,
**caractérisé en ce que**
le système de pulvérisation (2) peut être pivoté autour d'un angle de pivotement, qui est supérieur à 10°, de manière préférée est supérieur à 20°, de manière préférée est supérieur à 30°, et de manière préférée est supérieur à 40°.

3. Dispositif (1) selon au moins l'une quelconque des revendications précédentes,
**caractérisé en ce que**
une distance entre le système de réglage (8) et le support (6) peut être modifiée par un déplacement du système de réglage (8) par rapport au support (6).

4. Dispositif (1) selon au moins l'une quelconque des revendications précédentes,
**caractérisé en ce que**
le système de réglage (8) est relié au support (6) par l'intermédiaire d'au moins deux éléments de couplage (12).

5. Dispositif (1) selon au moins l'une quelconque des revendications précédentes,
**caractérisé en ce que**
dans la position de travail, il n'existe aucun contact mécanique entre le système de réglage (8) et le système de pulvérisation et entre le système de réglage (8) et la partie faisant saillie (26, 46).

6. Dispositif (1) selon la revendication précédente,
**caractérisé en ce que**
la partie faisant saillie est disposée sur le système de pulvérisation par l'intermédiaire d'un bras (14).

7. Dispositif (1) selon au moins l'une quelconque des revendications précédentes,
**caractérisé en ce que**
le système de pulvérisation (2, 4) présente un système de raccordement pour raccorder une conduite d'amenée destinée à amener le produit phytosanitaire.

8. Procédé pour faire fonctionner un dispositif (1) de pulvérisation de plantes avec des produits pouvant s'écouler et en particulier des produits phytosanitaires (PSM), dans lequel dans une position de travail, le produit pouvant s'écouler est appliqué sur les plantes avec au moins un premier système de pulvérisation (2) et un deuxième système de pulvérisation (4), dans lequel les systèmes de pulvérisation (2, 4) présentent respectivement un système de conduite tubulaire (22, 42), lesquels s'étendent dans une direction longitudinale (L) prédéfinie et lesquels acheminent le produit pouvant s'écouler et dans lequel les systèmes de pulvérisation présentent respectivement au moins une tête de pulvérisation (24, 44) destinée à distribuer le produit pouvant s'écouler, qui est en communication fluidique avec le système de conduite qui lui est associé,
dans lequel les systèmes de pulvérisation sont pivotés par rapport à un axe de pivotement (S) prédéfini pour transférer le dispositif depuis la position de travail dans une position de repos, dans lequel l'axe de pivotement (S) est perpendiculaire à l'axe longitudinal (L) des systèmes de conduite (22, 42),
dans lequel les systèmes de pulvérisation sont disposés de manière à pouvoir pivoter sur un support (6) et dans lequel un pivotement à la fois du premier système de pulvérisation (2) et du deuxième système de pulvérisation (4) entre une position de travail et la position de repos est mis en oeuvre au moyen d'un système de réglage, dans lequel le système de réglage (8) est mobile par rapport au support (6),
**caractérisé en ce que**
dans la position de travail, un déplacement par pivotement du premier système de pulvérisation (2) par rapport à l'axe de pivotement (S) dans au moins une direction de pivotement n'est pas couplé au déplacement par pivotement du deuxième système de pulvérisation (4) par rapport à l'axe de pivotement (S), dans lequel est disposée sur au moins un système de pulvérisation (2, 4) une partie faisant saillie (26, 46), laquelle établit un contact avec le système de réglage (8) en fonction d'une position du système de réglage.
